# EUROPÄISCHE PATENTANMELDUNG

(11) **EP 4 818 670 A1**
(43) Veröffentlichungstag der Anmeldung: **07.10.2026**
(21) Anmeldenummer: 25167978.3
(22) Anmeldetag: 02.04.2025
(51) Int. Cl.: G01M 13/027, E05F 15/41, G01M 99/00

(54) **VERFAHREN ZUM PRÜFEN EINES ANTRIEBS FÜR EINE VERSTELLANORDNUNG EINES KRAFTFAHRZEUGS**

(71) Anmelder: Brose Fahrzeugteile SE & Co. Kommanditgesellschaft, Bamberg, 96052 Bamberg (DE)
(72) Erfinder: von der Wehd, René, 96106 Ebern (DE)
(74) Vertreter: Gottschald Patentanwälte Partnerschaft mbB

(57) **Zusammenfassung**

Die Erfindung betrifft ein Verfahren zum Prüfen eines Antriebs (1) für eine Verstellanordnung eines Kraftfahrzeugs (2), das Verfahren umfassend: Verstellen des Antriebs (1) mittels einer motorbetriebenen Prüfvorrichtung (13) in einer Einfahrbewegung aus der ausgefahrenen Stellung in die eingefahrene Stellung unter Überwachung der mittels der Prüfvorrichtung (13) aufgewendeten Prüfkraft und eines elektrischen Antriebswerts sowie der Drehzahl des Antriebsmotors (8), wobei der Antriebsmotor (8) mit einer über die Ausfahrbewegung variierenden Antriebsleistung betrieben wird; Verstellen des Antriebs (1) mittels der Prüfvorrichtung (13) in einer Ausfahrbewegung aus der eingefahrenen Stellung in die ausgefahrene Stellung, wobei der Antriebsmotor (8) mit einer über die Einfahrbewegung variierenden Antriebsleistung betrieben wird; Ermitteln, mittels der Prüfvorrichtung (13), einer mechanischen Gegenkraft umfassend Reibkraft und Federkraft des Antriebs (1) anhand der Prüfkraft in der Ausfahrbewegung und in der Einfahrbewegung unter Berücksichtigung der variierenden Antriebsleistung; sowie Ermitteln, mittels der Prüfvorrichtung (13), einer Betriebsgröße des Antriebsmotors (8) in der Einfahrbewegung und/oder Ausfahrbewegung.

## Beschreibung

Die vorliegende Erfindung betrifft ein Verfahren zum Prüfen eines Antriebs für eine Verstellanordnung eines Kraftfahrzeugs gemäß Anspruch 1.

Die Verstellanordnung kann jedwedem Verstellelement eines Kraftfahrzeugs zugeordnet sein. Dazu gehören Heckklappen, Heckdeckel, Hecktüren, Seitentüren oder dergleichen. Insoweit ist der Begriff "Verstellelement" vorliegend weit zu verstehen.

Der in Rede stehende Antrieb kann einer Antriebsanordnung zugeordnet sein und der motorischen Verstellung des Verstellelements zwischen einer vollständig geschlossenen Stellung und einer vollständig geöffneten Stellung dienen. Eine Herausforderung stellt dabei das Halten des Verstellelements dar. Dies betrifft Situationen, in der ein Bediener eine Zwischenstellung bewusst anfährt oder in welcher der Antrieb in einer Zwischenstellung ausfällt. Auch soll die vollständig geöffnete Stellung sicher stabilisiert werden, wofür der Antrieb mit einer Federanordnung ausgestattet ist.

In der Produktion solcher Antriebe ist ein End-of-Line-Test vorgesehen, mit welchem die mechanische und motorische Funktion des Antriebs geprüft wird. Vorgesehen ist hierbei ein Ermitteln einer mechanischen Gegenkraft des Antriebs, welche die Wirkung der Reibkraft und der Federkraft umfasst und welche wesentlich für die angesprochene Haltefunktion ist. Die mechanische Gegenkraft lässt sich beispielsweise bei abgeschaltetem Antriebsmotor durch ein mittels einer Prüfvorrichtung eingeleitetes Einfahren und Ausfahren des Antriebs ermitteln. Betriebswerte des Antriebsmotors, wie der auftretende Schallpegel, Motorkennwerte oder dergleichen, können in einem weiteren Testbetrieb gegen eine vorgegebene Last in der Prüfvorrichtung ermittelt werden.

Der Erfindung liegt das Problem zugrunde, das Verfahren hinsichtlich des Prüfaufwands weiter zu optimieren.

Das obige Problem wird durch die Merkmale von Anspruch 1 gelöst.

Wesentlich ist die grundsätzliche Überlegung, die Bestimmung der mechanischen Gegenkraft und des Betriebswerts des Antriebsmotors in einem einzigen Vorgang, hier mit einer Einfahrbewegung und Ausfahrbewegung, gemeinsam zu vorzunehmen. Zum Bestimmen des Betriebswerts ist hierbei das Betreiben des Antriebsmotors notwendig und beeinflusst die von der Prüfvorrichtung aufzuwendende Prüfkraft. Wird jedoch eine variierende Antriebsleistung des Antriebsmotors in Einfahrbewegung und Ausfahrbewegung genutzt, können die elektromotorischen Beiträge des Antriebsmotors und der mechanischen Gegenkraft auf die Prüfkraft rechnerisch voneinander getrennt werden.

Das Verfahren umfasst:
- Verstellen des Antriebs mittels einer motorbetriebenen Prüfvorrichtung in einer Einfahrbewegung aus der ausgefahrenen Stellung in die eingefahrene Stellung unter Überwachung der mittels der Prüfvorrichtung aufgewendeten Prüfkraft und eines elektrischen Antriebswerts sowie der Drehzahl des Antriebsmotors, wobei der Antriebsmotor mit einer über die Ausfahrbewegung variierenden Antriebsleistung betrieben wird;
- Verstellen des Antriebs mittels der Prüfvorrichtung in einer Ausfahrbewegung aus der eingefahrenen Stellung in die ausgefahrene Stellung unter Überwachung der mittels der Prüfvorrichtung aufgewendeten Prüfkraft und eines elektrischen Antriebswerts sowie der Drehzahl des Antriebsmotors, wobei der Antriebsmotor mit einer über die Einfahrbewegung variierenden Antriebsleistung betrieben wird;
- Ermitteln, mittels der Prüfvorrichtung, einer mechanischen Gegenkraft umfassend Reibkraft und Federkraft des Antriebs anhand der Prüfkraft in der Ausfahrbewegung und in der Einfahrbewegung unter Berücksichtigung der variierenden Antriebsleistung, sowie
- Ermitteln, mittels der Prüfvorrichtung, einer Betriebsgröße des Antriebsmotors in der Einfahrbewegung und/oder Ausfahrbewegung.

Zum gemeinsamen Ermitteln der mechanischen Gegenkraft und des Betriebswerts des Antriebsmotors ist lediglich eine einzige Einfahrbewegung und Ausfahrbewegung ausreichend, sodass nach dem Ermitteln der mechanischen Gegenkraft auf einen zusätzlichen Testbetrieb des Antriebsmotors verzichtet werden. Daher werden die für das Prüfen in Anspruch genommene Zeit und die anfallenden Kosten deutlich reduziert.

Die Ansprüche 2 bis 5 geben vorteilhafte Ausgestaltungen des vorschlagsgemäßen Verfahrens an.

Im Folgenden wird die Erfindung anhand einer lediglich Ausführungsbeispiele darstellenden Zeichnung näher erläutert. In der Zeichnung zeigt
- Fig. 1: den Heckbereich eines Kraftfahrzeugs mit einer Verstellanordnung,
- Fig. 2: ein Antrieb der Verstellanordnung gemäß Fig. 1 jeweils in einem Längsschnitt in einer Prüfvorrichtung a) im eingefahrenen Zustand und b) im ausgefahrenen Zustand,
- Fig. 3: ein schematisches Diagramm der Prüfkraft über dem Verstellweg in einer ersten Prüfroutine und
- Fig. 4: ein schematisches Diagramm a) der Drehzahl des Antriebsmotors sowie b) der Antriebsspannung über dem Verstellweg in einer zweiten Prüfroutine.

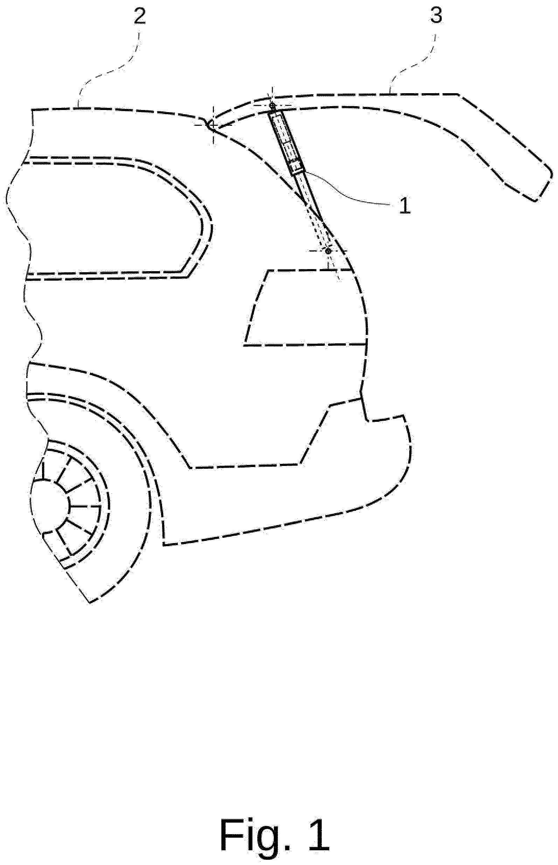

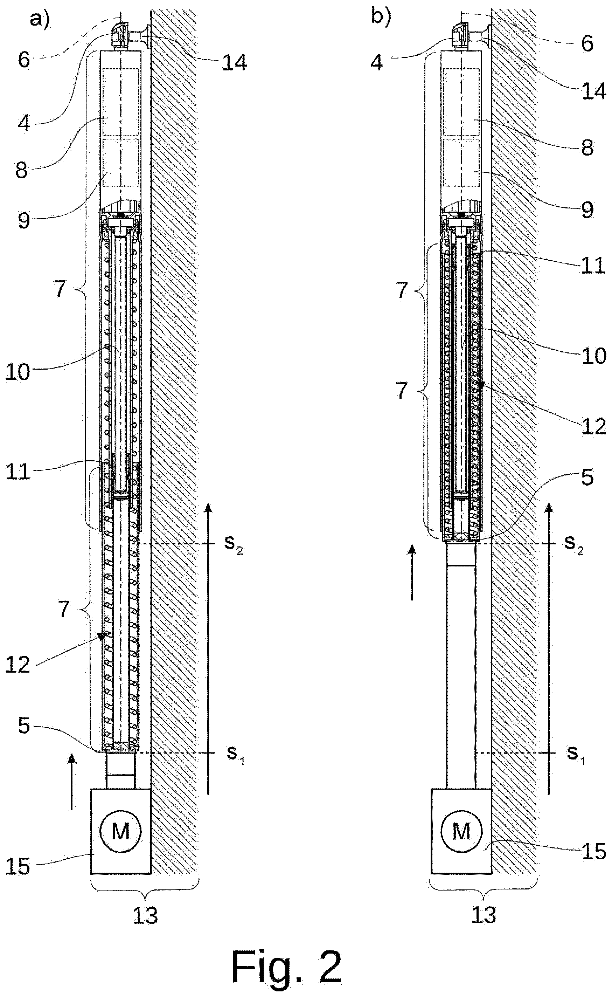

Die in den Figuren dargestellten und insoweit bevorzugten Ausführungsbeispiele betreffen ein Verfahren zum Prüfen eines Antriebs 1 für eine Verstellanordnung eines Kraftfahrzeugs 2. Die in den Figuren 1 und 2 dargestellte Verstellanordnung weist hier einen Antrieb 1, hier und vorzugsweise einen Spindelantrieb, auf und dient der Verstellung, hier der motorischen Verstellung, eines Verstellelements 3 in Form einer Klappe eines Kraftfahrzeugs 2. Die Klappe ist mittels der Verstellanordnung oder jedenfalls mit deren Unterstützung in Öffnungsrichtung und/oder in Schließrichtung der Klappe verstellbar.

Bei der Klappe handelt es sich hier und vorzugsweise, wie Fig. 1 zeigt, um eine Heckklappe des Kraftfahrzeugs 2. Der Anwendungsfall "Heckklappe" ist für die Verstellanordnung besonders vorteilhaft, da der dort vorhandene Bauraum mit der Verstellanordnung besonders gut ausgenutzt werden kann. Grundsätzlich lässt sich die Verstellanordnung aber auch auf andere Arten von Verstellelementen eines Kraftfahrzeugs 2 anwenden. Hierunter fallen Heckdeckel, Fronthauben, Türen, insbesondere Seiten- oder Hecktüren, oder dergleichen. Auch Schiebetüren lassen sich zumindest über einen Verstellbereich mithilfe der vorschlagsgemäßen Verstellanordnung, insbesondere motorisch, verstellen.

Der Antrieb 1 weist einen verstellelementseitigen Anschluss 4, also einen Anschluss 4 zum Koppeln der Verstellanordnung mit dem Verstellelement 3, und einen karosserieseitigen Anschluss 5, also einen Anschluss 5 zum Koppeln der Verstellanordnung mit der Karosserie des Kraftfahrzeugs 2, auf.

Der Antrieb 1 weist einen Komponentenstrang mit zwei entlang einer geometrischen Verstellachse 6 zwischen einer eingefahrenen Stellung und einer ausgefahrenen Stellung zueinander, insbesondere linear, verstellbaren Strangabschnitten 7 mit mehreren Strangkomponenten auf. Die Strangkomponenten sind kraftübertragend oder wie hier drehmomentübertragend miteinander gekoppelt, um eine in die Anschlüsse 4, 5 von außen eingeleitete Kraft oder ein vom Antriebsmotor 8 erzeugtes Drehmoment zu übertragen. Jedem der beiden Strangabschnitte 7 ist jeweils einer der Anschlüsse 5, 6 zugeordnet, sodass sich der jeweilige Anschluss 4, 5 mit dem Strangabschnitt 7 zusammen verlagert, also dessen Bewegung folgt, wenn die Strangabschnitte 7 zueinander verstellt werden.

Dem Komponentenstrang sind als Strangkomponenten den Antriebsmotor 8 und ein optionales Zwischengetriebe 9 sowie die Getriebekomponenten eines Vorschubgetriebes, hier eine Spindel 10 und eine damit kämmende Spindelmutter 11, angeordnet. Dabei sind hier und vorzugsweise der Antriebsmotor 8 und das optionale Zwischengetriebe 9 sowie die Spindel 10 dem einen Strangabschnitt 7, hier einem dem verstellelementseitigen Anschluss 4 zugeordneten Strangabschnitt 7, zugeordnet und die Spindelmutter 11 ist dem anderen Strangabschnitt 7, hier einem dem karosserieseitigen Anschluss 5 zugeordneten Strangabschnitt 7, zugeordnet. Als Strangkomponente kann zudem eine mechanische Bremsanordnung vorgesehen sein, welche einem Verstellen der Strangabschnitte 7 zueinander aufgrund einer externen Kraft auf die Anschlüsse 4, 5 entgegenwirkt.

Die zwei Anschlüsse 4, 5 sind entlang der geometrischen Verstellachse 6, hier linear, zueinander verstellbar, und zwar in eine erste Verstellrichtung, die insbesondere einem Öffnen der Klappe entspricht (Ausfahrbewegung des Antriebs 1), und in eine entgegengesetzte, zweite Verstellrichtung, die insbesondere einem Schließen der Klappe entspricht (Einfahrbewegung des Antriebs 1).

Wie die Figuren 2a) und b) zeigen, weist die Verstellanordnung eine Federanordnung 12, hier und vorzugsweise mit einer koaxial zu der geometrischen Verstellachse 6 angeordneten Schraubenfeder, weiter vorzugsweise einer Schraubendruckfeder, auf, die die Strangabschnitte 7 relativ zueinander, hier in die ausgefahrene Stellung, vorspannt.

Dem Antrieb 1 kommt neben der motorischen Verstellung des Verstellelements 3 die Funktion zu, das Verstellelement 3 bei abgeschaltetem Antrieb 1 zumindest über einen Abschnitt des Verstellbereichs selbsttätig zu halten. Zu der Haltefunktion trägt neben der Federanordnung 12 der Effekt mechanischer Reibung in den Strangkomponenten bei, wobei die Reibung tendenziell einem Verstellen des Verstellelements 3 entgegenwirkt. Die Reibung kann von der Wechselwirkung und Ausgestaltung einer Vielzahl von Strangkomponenten, insbesondere dem Vorschubgetriebe, dem Zwischengetriebe 9, dem Antriebsmotor 8, der Bremsanordnung und dergleichen abhängen.

In dem vorschlagsgemäßen Verfahren wird eine mechanische Gegenkraft des Antriebs 1 ermittelt, welche die mechanische Reibkraft und die Federkraft des Antriebs 1 umfasst. Die mechanische Gegenkraft ist die Kraft, welche aufgewendet werden muss, um den Antrieb 1 ohne Betreiben des Antriebsmotors 8 zu verstellen und enthält somit keine elektromotorische Kraftkomponente des Antriebsmotors 8. Das Verfahren findet vorzugsweise als End-of-Line-Test Anwendung, wobei mit Abschluss der Herstellung die Antriebe 1 vor der eigentlichen Inbetriebnahme auf Funktionstüchtigkeit geprüft werden.

Für das Verfahren wird eine Prüfvorrichtung 13 genutzt, in welcher der Antrieb 1 anordenbar ist und welche den Antrieb 1 über die zwei Anschlüsse 5, 6 durch Einwirkung einer Prüfkraft verstellen kann. Die Prüfvorrichtung 13 ist beispielhaft in Fig. 2 gezeigt, wobei einer der Anschlüsse 4, 5 an einem festen Widerlager 14 gehalten wird, während der weitere Anschluss 4, 5 mittels eines Prüfmotors 15 relativ zum Widerlager 14 verstellt werden kann.

Die Prüfvorrichtung 13 ist hier ferner dafür eingerichtet, bei einem Verstellen des Antriebs 1 die Prüfkraft, welche zum Verstellen des Antriebs 1 in die Anschlüsse 4, 5 eingeleitet wird, zu messen und vorzugsweise im Verlauf einer Prüfroutine aufzuzeichnen. Die Prüfvorrichtung 13 ist dafür eingerichtet, den Antriebsmotor 8 des Antriebs 1 auf eine vorgegebene Weise anzusteuern. Die Prüfvorrichtung 13 kann hierbei einen elektrischen Antriebswert des Antriebsmotors 8 messen und vorzugsweise aufzeichnen. Bei dem Antriebswert handelt es sich insbesondere um die dem Antriebsmotor 8 bereitgestellte Antriebsspannung und/oder den zugeführten Antriebsstrom. Hier und vorzugsweise werde sowohl Antriebsspannung als auch Antriebsstrom bestimmt. Denkbar ist allerdings auch, dass lediglich Antriebsspannung oder Antriebsstrom gemessen werden, wobei beispielsweise eine Motorkonstante in der Auswertung als vorbestimmter Parameter einfließt. Eine Steueranordnung der Prüfvorrichtung 13 ist hier und vorzugsweise vorgesehen, welche über einen Prozessor mit einem Speicher und einer Programmierung zur Umsetzung des Verfahrens ausgestattet ist.

Das Verfahren umfasst:
- Verstellen des Antriebs 1 mittels der motorbetriebenen Prüfvorrichtung 13 in einer Einfahrbewegung aus der ausgefahrenen Stellung in die eingefahrene Stellung unter Überwachung der mittels der Prüfvorrichtung 13 aufgewendeten Prüfkraft und eines elektrischen Antriebswerts sowie der Drehzahl des Antriebsmotors 8, wobei der Antriebsmotor 8 mit einer über die Ausfahrbewegung variierenden Antriebsleistung betrieben wird;
- Verstellen des Antriebs 1 mittels der Prüfvorrichtung 13 in einer Ausfahrbewegung aus der eingefahrenen Stellung in die ausgefahrene Stellung unter Überwachung der mittels der Prüfvorrichtung 13 aufgewendeten Prüfkraft und eines elektrischen Antriebswerts sowie der Drehzahl des Antriebsmotors 8, wobei der Antriebsmotor 8 mit einer über die Einfahrbewegung variierenden Antriebsleistung betrieben wird;

- Ermitteln, mittels der Prüfvorrichtung 13, einer mechanischen Gegenkraft umfassend Reibkraft und Federkraft des Antriebs 1 anhand der Prüfkraft in der Ausfahrbewegung und in der Einfahrbewegung unter Berücksichtigung der variierenden Antriebsleistung; sowie
- Ermitteln, mittels der Prüfvorrichtung 13, einer Betriebsgröße des Antriebsmotors 8 in der Einfahrbewegung und/oder Ausfahrbewegung.

Die Aktionen des Verfahrens können in beliebiger zeitlicher Abfolge und/oder gleichzeitig erfolgen. Vorzugsweise wird zunächst eine Einfahrbewegung bewirkt, welcher insbesondere eine Ausfahrbewegung folgt. Eine umgekehrte Reihenfolge ist denkbar.

Interessant bei dem vorschlagsgemäßen Verfahren ist, dass Einfahrbewegung und Ausfahrbewegung unter Einfluss des Antriebsmotors 8 durchgeführt werden. Um auch angesichts der durch den Antriebsmotor 8 ausgeübten Antriebskraft die mechanische Gegenkraft bestimmen zu können, wird die Antriebsleistung des Antriebsmotors 8 in der Einfahrbewegung und Ausfahrbewegung variiert. Unter einem Variieren ist hierbei zu verstehen, dass mindestens zwei verschiedene Beträge der Antriebsleistung über das Ansteuern des Antriebs 1 bewirkt werden. Die Einfahrbewegung und die Ausfahrbewegung können auch teilweise bei abgeschalteten Antriebsmotor 8 vorgenommen werden. Vorzugsweise werden jedoch mit dem Variieren der Antriebsleistung mindestens zwei verschiedene Antriebsleistungen mit einem Betrag von größer als Null bewirkt.

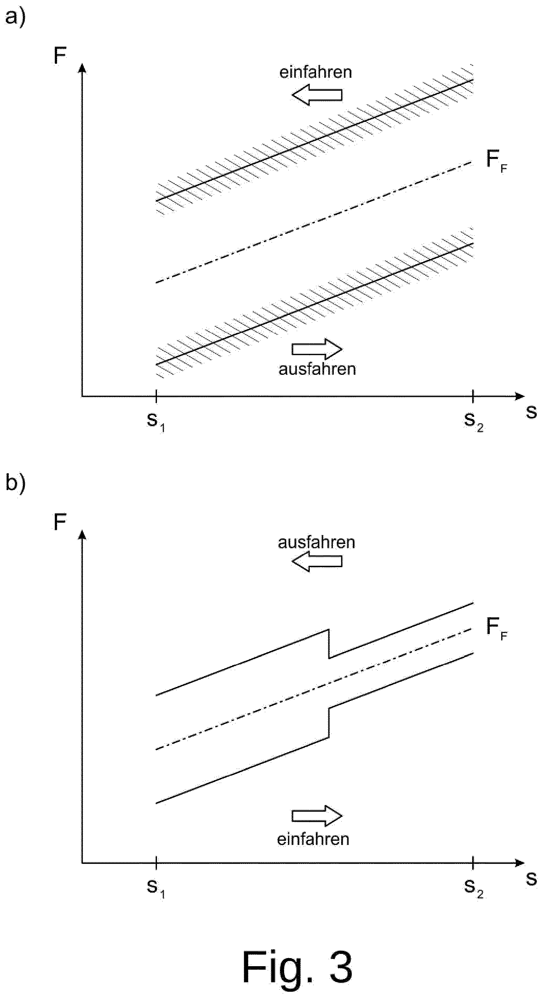

Fig. 3a) zeigt zunächst ein Diagramm der Prüfkraft F über dem Verstellweg s bei stets abgeschaltetem Antriebsmotor 8, was nicht unter das vorschlagsgemäße Verfahren fällt. Die Federkraft F_{F} steigt hier in einem linearen Verlauf von der ausgefahrenen Stellung s₁ in die eingefahrene Stellung s₂ an. In der Einfahrbewegung ist durch die Prüfkraft als mechanische Gegenkraft einerseits die ansteigende Federkraft F_{F} und andererseits die Reibungskraft zu überwinden (obere Linie). In der Ausfahrbewegung ist die Federkraft F_{F} über die Prüfkraft zu halten, jedoch über die Reibungskraft reduziert (untere Linie).

Damit entsteht eine Hysterese im Verlauf der Prüfkraft zwischen Einfahrbewegung und Ausfahrbewegung.

Fig. 3b) zeigt nun ein Diagramm der Prüfkraft F über dem Verstellweg s unter einem gleichzeitigen Ansteuern des Antriebsmotors 8 in einer ersten Prüfroutine im Rahmen des vorschlagsgemäßen Verfahrens. Die Hysterese in der Prüfkraft zwischen Einfahrbewegung und Ausfahrbewegung ist damit nicht mehr nur über die mechanische Gegenkraft bestimmt, sondern zusätzlich über die vom Antriebsmotor 8 bereitgestellte Antriebsmotorkraft. Um dennoch die mechanische Gegenkraft ohne die Antriebsmotorkraft bestimmen zu können, wird die Antriebsleistung über die Einfahrbewegung und die Ausfahrbewegung variiert, wobei in Fig. 3b) beispielhaft zwei verschiedene Antriebsleistungen zugeführt werden. Die Prüfkraft ändert sich entsprechend mit der Variation der Antriebsleistung, sodass es über eine Analyse der Veränderung der Prüfkraft bei bekannter Variation der Antriebsleistung ermöglicht ist, den Anteil der Antriebsmotorkraft in der Prüfkraft vom Anteil der mechanischen Gegenkraft zu unterscheiden.

Die mechanische Gegenkraft, insbesondere der Verlauf der mechanischen Gegenkraft in der Einfahrbewegung und in der Ausfahrbewegung kann mit einer Prüfvorgabe verglichen werden, um zu entscheiden, ob der zu prüfende Antrieb 1 bestimmungsgemäß funktioniert. Beispielsweise kann vorgegeben sein, dass die mechanische Gegenkraft über zumindest einen Abschnitt der Einfahrbewegung innerhalb eines vorgegebenen, stellungsabhängigen Intervalls liegt und über zumindest einen Abschnitt der Ausfahrbewegung innerhalb eines vorgegebenen, stellungsabhängigen Intervalls liegt. Damit können die Anteile von Federkraft und Reibkraft gemeinsam anhand der mechanischen Gegenkraft geprüft werden. Hierfür kann beispielsweise aus dem gemessenen Verlauf der Prüfkraft eine um die Antriebsmotorkraft bereinigte mechanische Gegenkraft berechnet werden, indem anhand der Variation der Antriebsleistung auf einen Kraftverlauf bei einer Antriebsleistung von Null zurückgerechnet wird. Damit wird ein Verlauf der mechanischen Gegenkraft analog zur Darstellung der Prüfkraft aus Fig. 3a) erhalten. Die Prüfvorgabe kann einen Abgleich mit jeweils einem zulässigen, linear mit der Stellung verlaufenden Korridor für die Einfahrbewegung und die Ausfahrbewegung enthalten. Die Korridore sind in Fig. 3a) schraffiert dargestellt. Liegt die mechanische Gegenkraft für beide Bewegungen im jeweiligen Korridor, ist der Antrieb fehlerfrei. Bei Abweichungen außerhalb des Korridors wird auf einen fehlerhaften Antrieb geschlossen.

Denkbar ist ferner, über die Hysterese aus der ermittelten mechanischen Gegenkraft die Anteile der Federkraft und der Reibkraft zu bestimmen. Mit dem Verlauf der mechanischen Gegenkraft kann insbesondere die Federkonstante sowie die Federvorspannung berechnet werden.

Da der Antrieb 1 in der Einfahrbewegung und Ausfahrbewegung angesteuert wird, kann mit der gleichen Prüfroutine die Betriebsgröße des Antriebsmotors 8 bestimmt werden. Vorzugsweise ist vorgesehen, dass als Betriebsgröße des Antriebsmotors 8 ein Akustikwert, ein Motorkennwert und/oder eine Sensorfunktion ermittelt wird. Als Akustikwert können unter anderem Schallenergiegrößen, insbesondere in vorbestimmten Frequenzbereichen, ermittelt werden. Der Motorkennwert kann beispielsweise die Motorkonstante des Antriebsmotors 8 betreffen. Der Akustikwert und/oder Motorkennwert kann mit einer Vorgabe verglichen werden, um zwischen bestimmungsgemäßen und fehlerhaften Antrieben 1 zu unterscheiden. Mit der Sensorfunktion kann allgemein geprüft werden, ob ein Sensor des Antriebs 1 bestimmungsgemäß funktioniert. Der Sensor ist beispielsweise als Drehzahlsensor, Stellungssensor zum Bestimmen mindestens einer Stellung des Antriebs 1, Temperatursensor oder dergleichen ausgestaltet.

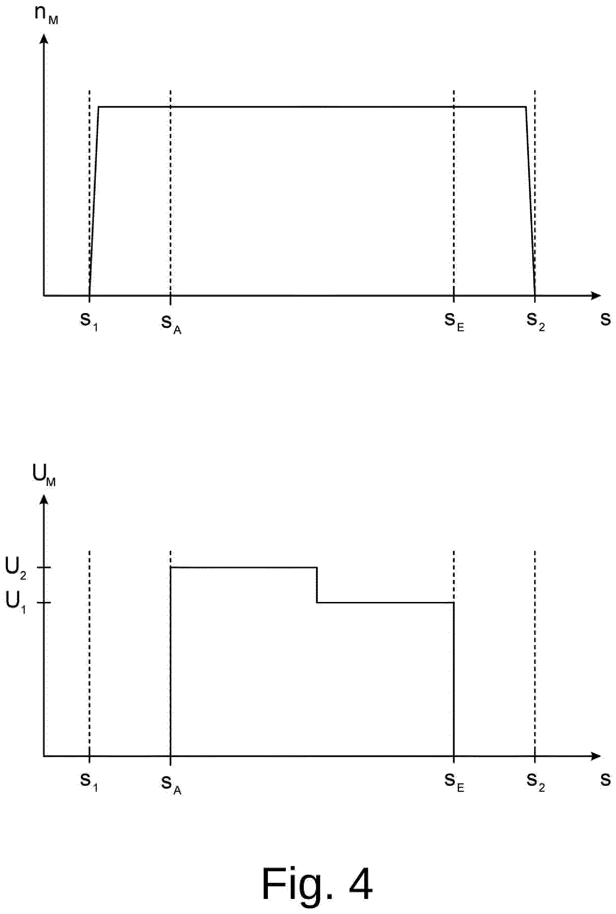

Besonders bevorzugt ist vorgesehen, dass die Einfahrbewegung und/oder Ausfahrbewegung zumindest abschnittsweise mit einer konstanten Drehzahl des Antriebsmotors 8 vorgenommen wird bzw. werden. Damit wird die Analyse der gemessenen Prüfkraft vereinfacht. Den beispielhaften Darstellungen aus Fig. 3 und Fig. 4 liegt hierbei eine konstante Drehzahl zugrunde.

In einer Ausgestaltung wird der Prüfmotor 15 mittels einer rückgekoppelten Regelung angesteuert, wobei die Drehzahl des Antriebsmotors 8 auf eine vorgegebene Soll-Drehzahl geregelt wird. Die Drehzahl kann folglich auf einfache Weise auch unter der Variation der Antriebsleistung konstant gehalten werden.

Weiter ist hier und vorzugsweise vorgesehen, dass die Antriebsleistung dahingehend variiert wird, dass mindestens zwei verschiedene Antriebsspannungen über jeweilige Bewegungsabschnitte in der Einfahrbewegung und/oder Ausfahrbewegung an den Antriebsmotor 8 angelegt werden. Diese Ausgestaltung ist beispielhaft in Fig. 3b) gezeigt, wobei eine erste Antriebsspannung für den Beginn der Einfahrbewegung und eine zweite Antriebsspannung für den Abschluss der Einfahrbewegung genutzt wird. Auf analoge Weise werden zwei Antriebsspannungen in der Ausfahrbewegung genutzt. Die erste Antriebsspannung ist unterschiedlich zur zweiten Antriebsspannung eingestellt. Grundsätzlich sind mehr als zwei unterschiedliche Antriebsspannungen und/oder eine kontinuierliche Variation der Antriebsspannung denkbar.

In einer weiteren Ausgestaltung ist vorgesehen, dass der Antriebsmotor 8 in einer Anfangsphase und in einer Endphase der Einfahrbewegung und/oder Ausfahrbewegung abgeschaltet bleibt. Diese Ausgestaltung ist in Fig. 4 für die Einfahrbewegung gezeigt. Von der ausgefahrenen Stellung s₁ zur Stellung S_{A} sowie von der Stellung S_{E} bis zur eingefahrenen Stellung s₂ bleibt der Antriebsmotor 8 unbestromt und der Antrieb 1 wird lediglich durch die Prüfvorrichtung 13 beaufschlagt. Die Ausfahrbewegung kann auf analoge Weise erfolgen. Eine Ermittlung des Reibungswerts kann insbesondere anhand der Anfangsphase und der Endphase erfolgen. In der Phase zwischen den Stellungen S_{A} und S_{E} wird der Antriebsmotor 8 mit einer insbesondere variierenden Antriebsleistung angesteuert, womit die Bestimmung des Betriebswerts erfolgen kann.

Weiter offenbart wird eine Prüfvorrichtung 13, welche dafür eingerichtet ist, an einem Antrieb 1 für eine Verstellanordnung eines Kraftfahrzeugs 2 das vorschlagsgemäße Verfahren durchzuführen. Auf die Ausführungen zum Verfahren wird verwiesen.

## Patentansprüche

1. Verfahren zum Prüfen eines Antriebs (1) für eine Verstellanordnung eines Kraftfahrzeugs (2),
wobei der Antrieb (1) zur Kopplung mit dem Kraftfahrzeug (2) einen verstellelementseitigen Anschluss (4) und einen karosserieseitigen Anschluss (5) aufweist,
wobei der Antrieb (1) einen Komponentenstrang mit zwei entlang einer geometrischen Verstellachse (6) zwischen einer eingefahrenen Stellung und einer ausgefahrenen Stellung zueinander verstellbaren Strangabschnitten (7), mit einem Antriebsmotor (8) und einem mit dem Antriebsmotor (8) gekoppelten Vorschubgetriebe, um eine in die Anschlüsse (5, 6) eingeleitete Kraft zu übertragen, aufweist, wobei jedem der Strangabschnitte (7) jeweils einer der Anschlüsse (5, 6) zugeordnet ist, und wobei eine Federanordnung (12) die beiden Strangabschnitte (7) gegeneinander vorspannt,
das Verfahren umfassend:
- Verstellen des Antriebs (1) mittels einer motorbetriebenen Prüfvorrichtung (13) in einer Einfahrbewegung aus der ausgefahrenen Stellung in die eingefahrene Stellung unter Überwachung der mittels der Prüfvorrichtung (13) aufgewendeten Prüfkraft und eines elektrischen Antriebswerts sowie der Drehzahl des Antriebsmotors (8), wobei der Antriebsmotor (8) mit einer über die Ausfahrbewegung variierenden Antriebsleistung betrieben wird;
- Verstellen des Antriebs (1) mittels der Prüfvorrichtung (13) in einer Ausfahrbewegung aus der eingefahrenen Stellung in die ausgefahrene Stellung unter Überwachung der mittels der Prüfvorrichtung (13) aufgewendeten Prüfkraft und eines elektrischen Antriebswerts sowie der Drehzahl des Antriebsmotors (8), wobei der Antriebsmotor (8) mit einer über die Einfahrbewegung variierenden Antriebsleistung betrieben wird;
- Ermitteln, mittels der Prüfvorrichtung (13), einer mechanischen Gegenkraft umfassend Reibkraft und Federkraft des Antriebs (1) anhand der Prüfkraft in der Ausfahrbewegung und in der Einfahrbewegung unter Berücksichtigung der variierenden Antriebsleistung; sowie
- Ermitteln, mittels der Prüfvorrichtung (13), einer Betriebsgröße des Antriebsmotors (8) in der Einfahrbewegung und/oder Ausfahrbewegung.

2. Verfahren nach Anspruch 1, **dadurch gekennzeichnet, dass** als Betriebsgröße des Antriebsmotors (8) ein Akustikwert, ein Motorkennwert und/oder eine Sensorfunktion ermittelt wird.

3. Verfahren nach Anspruch 1 oder 2, **dadurch gekennzeichnet, dass** die Einfahrbewegung und/oder Ausfahrbewegung zumindest abschnittsweise mit einer konstanten Drehzahl des Antriebsmotors (8) vorgenommen wird bzw. werden.

4. Verfahren nach Anspruch 1 oder 2, **dadurch gekennzeichnet, dass** die Antriebsleistung dahingehend variiert wird, dass mindestens zwei verschiedene Antriebsspannungen über jeweilige Bewegungsabschnitte in der Einfahrbewegung und/oder Ausfahrbewegung an den Antriebsmotor (8) angelegt werden.

5. Verfahren nach einem der vorhergehenden Ansprüche, **dadurch gekennzeichnet, dass** der Antriebsmotor (8) in einer Anfangsphase und in einer Endphase der Einfahrbewegung und/oder Ausfahrbewegung abgeschaltet bleibt.
